# FASCICULE DE BREVET EUROPEEN

(11) **EP 1 907 781 B1**
(45) Date de publication et mention de la délivrance du brevet: **30.08.2017**
(21) Numéro de dépôt: 06794170.8
(22) Date de dépôt: 11.07.2006
(51) Int. Cl.: F28D 21/00, B64D 13/00

(54) **ENSEMBLE PROPULSEUR POUR AERONEF COMPORTANT UN ECHANGEUR THERMIQUE, ET AERONEF COMPORTANT UN TEL ENSEMBLE PROPULSEUR**
ANTRIEBSEINHEIT MIT WÄRMETAUSCHER, UND MIT SOLCHER ANTRIEBSEINHEIT AUSGESTATTETES FLUGZEUG
PROPULSION UNIT PROVIDED WITH A HEAT EXCHANGER, AND AIRCRAFT PROVIDED WITH SUCH PROPULSION UNIT

(30) Priorité: 28.07.2005 FR 0552351
(43) Date de publication de la demande: 09.04.2008
(73) Titulaire: AIRBUS OPERATIONS (S.A.S), 31060 Toulouse (FR)
(72) Inventeur: MARCHE, Hervé, F-31120 Roquettes (FR)
(74) Mandataire: Gicquel, Olivier Yves Gérard
(86) Numéro de dépôt international: PCT/FR2006/001711
(87) Numéro de publication internationale: WO 2007/012725

(56) Documents cités:
- EP-A- 0 469 825
- WO-A-02/097353
- DE-A1- 3 602 608
- FR-A- 2 839 948
- FR-A1- 2 734 319
- US-A- 2 628 482
- US-A- 3 201 938
- US-A- 4 368 778
- US-A- 4 437 627
- US-A- 4 576 225
- US-A- 6 134 880

## Description

L'invention concerne un ensemble propulseur comportant un échangeur thermique destiné à être disposé au dessus d'un mât de fixation reliant un turboréacteur à une voilure d'un aéronef, ledit échangeur thermique étant apte à refroidir, au moins partiellement, un flux d'air très chaud au moyen d'un flux d'air froid.
L'invention concerne aussi un aéronef comportant au moins un ensemble propulseur selon l'invention.

Dans le domaine de l'aéronautique, il est connu d'utiliser de l'air chaud, prélevé à l'endroit des compresseurs des turboréacteurs d'un aéronef, dans des circuits de conditionnement d'air dudit aéronef. Les circuits de conditionnement d'air étant destinés au poste de pilotage et aux cabines transportant les passagers, il est nécessaire de refroidir cet air chaud avant de l'injecter dans lesdits circuits.

Pour cela, on utilise un échangeur thermique, dans lequel le flux d'air chaud croise un flux d'air froid prélevé au sortir d'une soufflante du turboréacteur. Le flux d'air froid et le flux d'air chaud circulent à l'intérieur d'un boîtier de l'échangeur thermique, généralement de forme parallélépipédique, de telle manière qu'un échange calorifique peut avoir lieu.

Un tel échangeur de chaleur est connu par exemple du document FR 2 839 948 A.

Généralement, le flux d'air chaud pénètre par une face avant dans le boîtier de l'échangeur thermique et y circule d'avant en arrière, à l'intérieur de plaques creuses. Le flux d'air chaud partiellement refroidi ressort du boîtier par une face arrière, afin d'être dirigé vers le circuit de conditionnement d'air. Le flux d'air froid, lui, pénètre par une face inférieure dans le boîtier de l'échangeur thermique et circule de bas en haut, entre les plaques creuses, puis est rejeté hors du boîtier par des ouïes ménagées sur une face supérieure, pour être évacué hors du mât réacteur.

Les flux d'air froid et d'air chaud sont donc perpendiculaires dans le boîtier d'échange thermique, entraînant un rendement peu élevé de l'échange calorifique au sortir de l'échangeur thermique.

L'air chaud à refroidir est prélevé dans le turboréacteur situé sous le mât de fixation. Il est donc nécessaire, pour amener ce flux d'air chaud dans l'échangeur thermique, de lui faire traverser la structure du mât. Afin de ne pas affaiblir la structure du mât, il est indispensable de préserver au maximum son intégrité, en évitant notamment le passage de trop nombreux conduits au travers.

Le plus souvent, l'air froid partiellement réchauffé est expulsé directement hors du turboréacteur. Il ne participe donc plus au cycle thermodynamique du moteur, ce qui entraîne une perte de performance du moteur. Cet air froid partiellement réchauffé, en s'écoulant au-dessus du mât de fixation reliant le turboréacteur à la voilure de l'aéronef, perturbe l'écoulement aérodynamique de l'aéronef. Par ailleurs, il est nécessaire d'utiliser un matériau pouvant résister aux températures élevées, ou de recouvrir les capots du turboréacteur d'un revêtement thermique, pour éviter que l'air froid réchauffé n'abîme lesdits capots. Cela tend à augmenter la masse d'un ensemble propulseur comportant un échangeur thermique. Il est également connu de réinjecter le flux d'air de refroidissement ayant circulé dans l'échangeur thermique dans le flux de poussée du turboréacteur. Pour cela, le conduit d'évacuation d'air de refroidissement doit traverser le mât de fixation pour rejoindre le turboréacteur, ce qui affaiblit la structure du mât.

Un but de l'invention est de fournir un ensemble propulseur pour aéronef comportant un échangeur thermique ayant un encombrement faible. Un autre but de l'invention est de fournir un tel ensemble propulseur pour aéronef comportant un échangeur thermique dans lequel l'air de refroidissement puisse être après utilisation réinjecté dans le flux de poussée du turboréacteur, sans que cela ait des conséquences néfastes pour la rigidité et la masse du mât de fixation. Un but supplémentaire de l'invention est de fournir un échangeur thermique ayant un rendement d'échange calorifique élevé. Dans l'invention on cherche également à augmenter les performances d'un ensemble propulseur comportant un échangeur thermique.

Pour cela, une canalisation d'arrivée d'air chaud et une canalisation de sortie d'air froid sont toutes les deux situées sur une même face arrière du boîtier de l'échangeur thermique. Par avant et arrière, on entend par rapport au sens d'écoulement de l'air situé à l'extérieur du boîtier. Le flux d'air froid réchauffé est donc canalisé au sortir du boîtier et il est possible de réinjecter cet air froid dans le flux d'air participant à la poussée du moteur, en l'amenant dans le canal de soufflante du turboréacteur. Les performances du turboréacteur ne sont ainsi que peu perturbées par le prélèvement d'air froid par l'échangeur thermique. De plus les capots du turboréacteur peuvent être réalisés en matériaux composites puisqu'ils ne sont pas mis en contact avec le flux d'air froid réchauffé. Dans la mesure où l'échangeur thermique est situé au-dessus du mât, la canalisation de sortie de l'air froid réchauffé doit traverser le mât pour rejoindre le turboréacteur. Selon l'invention, afin de diminuer l'encombrement de la tuyauterie dans le mât, on prévoit que la canalisation amenant l'air chaud prélevé dans le moteur jusqu'au boîtier de l'échangeur thermique, et qui doit traverser le mât, et la canalisation de sortie de l'air froid réchauffé sont coaxiales. Une seule canalisation traverse donc le mât de fixation, la deuxième canalisation étant logée dans la première canalisation. Un pré échange thermique peut avoir lieu le long de ces canalisations coaxiales. Selon l'invention, le flux d'air de refroidissement et le flux d'air chaud circulent horizontalement dans le boîtier, parallèlement l'un à l'autre, le flux d'air de refroidissement pénétrant dans le boîtier par une face avant dudit boîtier, le flux d'air chaud circulant d'arrière en avant puis d'avant en arrière dans le boîtier, de sorte que le flux d'air chaud et le flux d'air de refroidissement circulent au moins partiellement en sens inverse dans le boîtier. Le flux d'air chaud peut transiter à l'intérieur de tuyaux traversant horizontalement le boîtier de l'échangeur thermique. Le flux d'air froid transite alors librement entre les tuyaux. Les tuyaux dans lesquels transite l'air chaud peuvent former une anse, de manière à ce que le flux d'air chaud ait deux sens d'écoulement dans le boîtier, respectivement d'arrière vers l'avant, puis d'avant vers l'arrière. De plus, plusieurs anses peuvent être superposées dans le boîtier. On augmente ainsi le rendement de l'échange calorifique entre le flux d'air froid et le flux d'air chaud, la surface d'échange dans le boîtier étant augmentée. L'invention a pour objet un ensemble propulseur pour aéronef comportant un turboréacteur, un mât de fixation pour fixer le turboréacteur à une voilure de l'aéronef, et un échangeur thermique comportant un boîtier d'échange thermique fixé à une face supérieure du mât de fixation, dans lequel circulent un flux d'air chaud et un flux d'air de refroidissement, l'échangeur de chaleur comportant un conduit d'arrivée d'air chaud pour amener le flux d'air chaud dans le boîtier et un conduit d'évacuation d'air de refroidissement pour expulser le flux d'air de refroidissement hors du boîtier d'échange thermique, lesdits conduits étant concentriques et situés sur la même face arrière du boîtier, le flux d'air de refroidissement et le flux d'air chaud circulant horizontalement dans le boîtier, parallèlement l'un à l'autre, le flux d'air de refroidissement pénétrant dans le boîtier par une face avant dudit boîtier, le flux d'air chaud circulant d'arrière en avant puis d'avant en arrière dans le boîtier, de sorte que le flux d'air chaud et le flux d'air de refroidissement circulent au moins partiellement en sens inverse dans le boîtier. Selon des exemples de réalisation de l'invention, l'ensemble propulseur peut comporter tout ou partie des caractéristiques supplémentaires suivantes:
- le conduit d'évacuation d'air de refroidissement entoure le conduit d'arrivée d'air chaud;
- le boîtier comporte des guides d'air dans lesquels le flux d'air chaud circule, le flux d'air de refroidissement circulant autour desdits guides d'air;
- les guides d'air sont coudés, chaque guide d'air traversant au moins deux fois le boîtier d'échange thermique;
- les guides d'air sont disposés par paires dans le boîtier, des paires de guides d'air étant superposées dans ledit boîtier;
   - le conduit d'évacuation d'air de refroidissement traverse le mât de manière à expulser le flux d'air de refroidissement à l'arrière du turboréacteur.
   - le conduit d'évacuation d'air de refroidissement comporte deux buses d'expulsion disposées sous le mât, de part et d'autre du turboréacteur.
   - le conduit d'arrivée d'air chaud traverse le mât de fixation de manière à amener le flux d'air chaud depuis le turboréacteur jusqu'à l'arrière du boîtier de l'échangeur thermique, le conduit d'arrivée d'air chaud et le conduit d'évacuation d'air froid étant concentriques dans toute la traversée du mât.
   - un conduit d'arrivée d'air de refroidissement amenant le flux d'air de refroidissement depuis le turboréacteur jusqu'au boîtier de l'échangeur thermique transite au-dessus du mât de fixation.
   - le conduit d'arrivée d'air de refroidissement prélève le flux d'air de refroidissement frontalement dans le turboréacteur dans une zone de bifurcation des flux d'air située immédiatement après la soufflante du turboréacteur.

L'invention concerne également un aéronef comportant au moins un ensemble propulseur selon l'invention.

L'invention sera mieux comprise à la lecture de la description qui suit et à l'examen des figures qui l'accompagnent. Celles ci sont présentées à titre indicatif et nullement limitatif de l'invention. Les figures représentent :
- Figure 1 : une représentation schématique partielle d'un ensemble propulseur selon l'invention, comportant un échangeur thermique;
- Figure 2 : une vue de derrière d'un échangeur thermique selon un exemple de réalisation de l'ensemble propulseur selon l'invention ;
- Figure 3 : une coupe suivant III-III de la figure 2 ;
- Figure 4 : une coupe selon IV-IV de la figure 2.

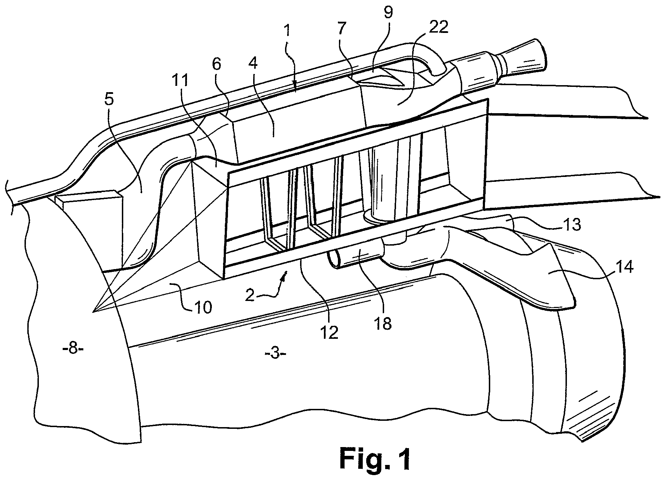

Sur la figure 1 on peut voir un échangeur thermique 1 disposé sur un mât de fixation 2 reliant un turboréacteur 3 à la voilure d'un aéronef (non représenté).

L'échangeur thermique 1 comporte un boîtier 4 de forme rectangulaire dans lequel un flux d'air de refroidissement et un flux d'air chaud circulent. Le flux d'air de refroidissement pénètre dans le boîtier 4, par un conduit d'arrivée d'air de refroidissement 5, au niveau de la face avant 6 dudit boîtier 4. Par face avant, on entend la face du boîtier dirigée vers la soufflante 8 du turboréacteur 3, opposée à la face arrière 7 dirigée vers l'arrière du turboréacteur. Dans l'exemple représenté à la figure 1, le flux d'air de refroidissement est prélevé frontalement dans le turboréacteur, dans une zone de bifurcation des flux d'air située immédiatement après la soufflante 8. Ainsi, le conduit d'arrivée d'air de refroidissement ne traverse pas la structure du mât 2, mais transite au-dessus de la pyramide 10 du mât 2. La pyramide 10 est la pointe avant du mât 2 par laquelle ledit mât 2 est fixé à une partie avant du turboréacteur 3. Le flux d'air de refroidissement pourrait également être prélevé, plus classiquement, latéralement dans un canal d'écoulement d'air ménagé entre le turboréacteur 3 et le capot de la nacelle (non représenté). Dans ce cas, le conduit d'arrivée d'air froid 5 doit faire un coude pour pouvoir rejoindre la face avant 6 du boîtier 4, et éventuellement traverser la structure forte du mât 2. Le conduit d'arrivée d'air froid 5 pourrait également déboucher sur une face latérale du boîtier 4, située du côté du capot où le flux d'air de refroidissement est prélevé.

Comme cela sera décrit plus en détails par la suite, le flux d'air de refroidissement circule librement dans le boîtier 4, entre des guides d'air dans lesquels le flux d'air chaud à refroidir circule. Le flux d'air de refroidissement circule ainsi d'avant en arrière dans le boîtier 4 et est canalisé au sortir du boîtier 4 par un conduit d'évacuation d'air de refroidissement 9 débutant au niveau de la face arrière 7 du boîtier 4. Le conduit d'évacuation d'air de refroidissement 9 traverse le mât 2 dans toute la hauteur dudit mât 2, pour rejoindre le turboréacteur 3 situé sous le mât 2. Par hauteur h, on entend la dimension du mât 2 depuis une face supérieure 11, sur laquelle le boîtier 4 est fixé, jusqu'à une face inférieure 12 dirigée vers le turboréacteur 3. Une fois le mât 2 traversé, le conduit d'évacuation d'air de refroidissement 9 se divise en deux buses latérales, respectivement gauche 13 et droite 14. Les buses latérales 13, 14 sont disposées de part et d'autre du plan vertical de symétrie du turboréacteur 3, de manière à être situées sur un flanc gauche et un flanc droit dudit plan de symétrie. Les buses 13, 14 sont dirigées vers l'arrière du turboréacteur, de sorte que le flux d'air de refroidissement est éjecté à l'arrière du turboréacteur 3 avec le flux d'air de poussée. La position latérale des buses 13, 14 permet de ne pas gêner la zone d'attache du mât 2 à l'arrière du turboréacteur 3.

Le flux d'air chaud à refroidir est amené dans le boîtier 4 par un conduit d'arrivée d'air chaud 18. Le conduit d'arrivée d'air chaud 18 amène l'air depuis le turboréacteur 3, situé sous le mât de fixation 2, jusqu'au boîtier 4 situé au-dessus du mât 2, en transitant par la structure dudit mât 2. Le conduit d'arrivée d'air chaud traverse donc également le mât 2 dans toute sa hauteur h. Le conduit d'arrivée d'air chaud 18 transite à l'intérieur du conduit d'évacuation d'air froid 9, de sorte qu'il n'est pas nécessaire de ménager deux trous à travers le mât 2.

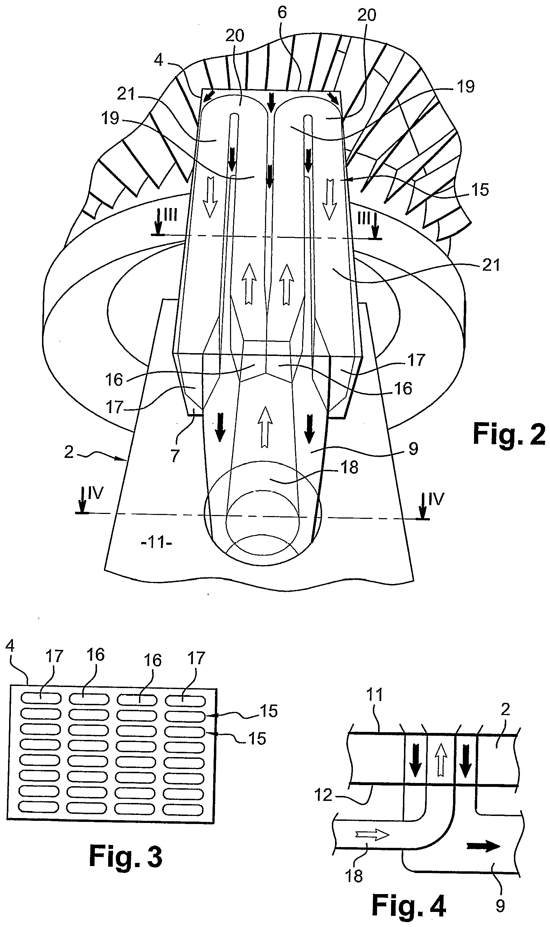

Sur la figure 2 est représenté un exemple particulier d'échangeur thermique 1 de l'ensemble propulseur selon l'invention.

Le boîtier 4 de l'échangeur thermique 1 comporte des guides d'air 15 dans lesquels le flux d'air chaud circule. Chaque guide d'air 15 comporte une entrée d'air 16 située sur la face arrière 7 du boîtier 4. Les entrées d'air 16 coïncident avec le conduit d'arrivée d'air chaud 18. Une première partie 19 du guide d'air 15 traverse de manière rectiligne, depuis l'arrière jusqu'à l'avant le boîtier 4. Un coude 20 du guide d'air 15 permet de relier la première partie 19 à une deuxième partie 21 qui traverse le boîtier 4 de manière rectiligne depuis l'avant vers l'arrière. Ainsi, le flux d'air chaud traverse deux fois dans la longueur le boîtier 4. Une sortie d'air 17 permet d'évacuer l'air chaud refroidi au niveau de la face arrière 7 du boîtier 4. Dans l'exemple représenté, les guides d'air 15 ne comportent qu'un seul coude 20 de sorte qu'ils ne traversent que deux fois le boîtier 4. Il est également possible de prévoir plusieurs coudes 20 de manière à ce que le flux d'air chaud fasse plusieurs allers retours dans le boîtier 4 avant d'être évacué. Tout le long de sa trajectoire dans les guides d'air 15, le flux d'air chaud est refroidi par le contact du flux d'air de refroidissement autour des guides d'air 15. L'échange calorifique se fait par convection, à travers la paroi des guides d'air 15. Le flux d'air de refroidissement circule d'avant en arrière dans le boîtier 4, parallèlement au flux d'air chaud.

Les guides d'air 15 sont disposés par paires adjacentes dans le boîtier 4. Par paires adjacentes, on entend situées côte à côte dans la largeur du boîtier 4. Par largeur, on entend la dimension du boîtier 4 s'étendant entre les faces latérales dudit boîtier 4. Les paires de guides d'air 15 peuvent être empilées les unes sur les autres dans la hauteur du boîtier 4 (figure 3). La hauteur du boîtier 4 est la dimension qui s'étend entre la face inférieure du boîtier 4, en contact avec la face supérieure 11 du mât 2 et la face supérieure dudit boîtier 4 dirigée vers la voilure de l'aéronef (non représentée). L'empilage des guides d'air 15 doit être tel qu'il reste un espace suffisant entre lesdits guides d'air 15 pour que le flux d'air de refroidissement puisse s'y infiltrer. Les entrées d'air 16 des guides d'air 15 sont centrales, c'est-à-dire bordées par les sorties d'air 17 qui sont situées à proximité des parois latérales du boîtier 4. Ainsi, un conduit d'évacuation dédoublé de l'air chaud refroidi 22 (figure 1) encadre le conduit d'évacuation de l'air de refroidissement 9 au niveau de la face arrière 7 du boîtier 4. Chaque tronçon du conduit d'évacuation d'air chaud refroidi débute sur un bord opposé de la face arrière 7 du boîtier 4. Passé le conduit d'évacuation d'air de refroidissement 9, les deux tronçons se rejoignent pour former un conduit 22 unique s'étendant le long de la face supérieure 11 du mât 2.

Le conduit d'arrivée d'air chaud 18 et le conduit d'évacuation d'air de refroidissement 9 sont tous les deux situés sur la face arrière 7 du boîtier 4. Comme les entrées d'air 16 des guides d'air 15 sont centrales dans le boîtier 4, tandis que le flux d'air de refroidissement se diffuse dans l'ensemble du volume du boîtier 4, il est avantageux d'introduire le conduit d'arrivée d'air chaud 18 dans le conduit d'évacuation d'air de refroidissement 9. Le flux d'air chaud traverse ainsi le mât 2 de bas en haut pour rejoindre le boîtier 4 et le flux d'air de refroidissement traverse le mât 2 de haut en bas pour rejoindre le flux de poussée du turboréacteur (figure 4). Par ailleurs, on évite un contact entre le conduit d'arrivée d'air chaud 18, dont la paroi est à une température élevée, et la structure interne du mât 2. La structure interne du mât 2 est ainsi moins affaiblie par le passage de cette double tuyauterie que par le passage du seul conduit d'arrivée d'air chaud de l'état de la technique. Bien entendu, dans une autre configuration des guides d'air 15, il est possible de prévoir que le conduit d'arrivée d'air chaud 9 entoure le conduit d'évacuation d'air de refroidissement 18.

Comme cela est représenté sur la figure 4, le conduit d'arrivée d'air chaud 18 s'étend axialement dans le conduit d'évacuation d'air de refroidissement 9 depuis la face inférieure 12 jusqu'à la face supérieure 11 du mât 2. On diminue ainsi l'encombrement dû au passage des conduits 9, 18 dans la structure forte du mât 2. De plus, depuis la face inférieure 12 du mât 2 jusqu'à la face arrière 7 du boîtier 4, il y a un échange calorifique possible entre le flux d'air de refroidissement et le flux d'air chaud, correspondant à un pré refroidissement du flux d'air chaud.

Dans un autre exemple de réalisation, il est possible de prévoir que chaque guide d'air comporte un nombre pair de coudes 20, de sorte que la sortie d'air 17 est située sur la face avant 6 du boîtier 4. Dans ce cas, le flux d'air chaud refroidi ressort à l'avant du boîtier 4. Le conduit d'évacuation du flux d'air chaud refroidi peut alors rejoindre le canal du starter situé au-dessus du boîtier 4 (figure 1). De même, on peut prévoir des guides d'air 15 droits, pour faire circuler l'air chaud dans une unique direction, depuis l'arrière vers l'avant du boîtier 4. Là encore, le flux d'air chaud refroidi ressort à l'avant du boîtier 4.

## Revendications

1. Ensemble propulseur pour aéronef comportant un turboréacteur (3), un mât de fixation (4) pour fixer le turboréacteur à une voilure de l'aéronef, et un échangeur thermique (1) comportant un boîtier d'échange thermique (4) fixé à une face supérieure (11) du mât de fixation, dans lequel circulent un flux d'air chaud et un flux d'air de refroidissement,
ledit échangeur de chaleur comportant un conduit d'arrivée d'air chaud (18) pour amener le flux d'air chaud dans le boîtier et un conduit d'évacuation d'air de refroidissement (9) pour expulser le flux d'air de refroidissement hors du boîtier d'échange thermique,
**caractérisé en ce que** ledit conduit d'arrivée d'air chaud et ledit conduit d'évacuation d'air de refroidissement sont concentriques et situés sur la même face arrière du boîtier, et
**en ce que** le flux d'air de refroidissement et le flux d'air chaud circulent horizontalement dans le boîtier, parallèlement l'un à l'autre, le flux d'air de refroidissement pénétrant dans le boîtier par une face avant (6) dudit boîtier, le flux d'air chaud circulant d'arrière en avant puis d'avant en arrière dans le boîtier, de sorte que le flux d'air chaud et le flux d'air de refroidissement circulent au moins partiellement en sens inverse dans le boîtier.

2. Ensemble propulseur selon la revendication 1, **caractérisé en ce que** le conduit d'évacuation d'air de refroidissement entoure le conduit d'arrivée d'air chaud.

3. Ensemble propulseur selon l'une des revendications 1 à **2**, **caractérisé en ce que** le boîtier comporte des guides d'air (15) dans lesquels le flux d'air chaud circule, le flux d'air de refroidissement circulant autour desdits guides d'air.

4. Ensemble propulseur selon la revendication **3**, caractérisé en ce les guides d'air sont coudés, chaque guide d'air traversant au moins deux fois le boîtier d'échange thermique.

5. Ensemble propulseur selon l'une des revendications **3** à **4**, **caractérisé en ce que** les guides d'air sont disposés par paires dans le boîtier, des paires de guides d'air étant superposées dans ledit boîtier.

6. Ensemble propulseur selon l'une des revendications 1 à **5**, **caractérisé en ce que** le conduit d'évacuation d'air de refroidissement (9) traverse le mât, de manière à expulser le flux d'air de refroidissement à l'arrière du turboréacteur.

7. Ensemble propulseur selon la revendication **6**, **caractérisé en ce que** le conduit d'évacuation d'air de refroidissement comporte deux buses d'expulsion disposées sous le mât, de part et d'autre du turboréacteur.

8. Ensemble propulseur selon l'une des revendications 1 à **7**, **caractérisé en ce que** le conduit d'arrivée d'air chaud traverse le mât de fixation, de manière à amener le flux d'air chaud depuis le turboréacteur jusqu'à l'arrière du boîtier de l'échangeur thermique, le conduit d'arrivée d'air chaud et le conduit d'évacuation d'air froid étant concentriques dans toute la traversée du mât.

9. Ensemble propulseur selon l'une des revendications 1 à **8**, **caractérisé en ce qu'**un conduit d'arrivée d'air de refroidissement amenant le flux d'air de refroidissement depuis le turboréacteur jusqu'au boîtier de l'échangeur thermique transite au-dessus du mât de fixation.

10. Ensemble propulseur selon la revendication **9**, **caractérisé en ce que** le conduit d'arrivée d'air de refroidissement prélève le flux d'air de refroidissement frontalement dans le turboréacteur dans une zone de bifurcation des flux d'air située immédiatement après la soufflante (8) du turboréacteur (3).

11. Aéronef comportant au moins un ensemble propulseur selon l'une des revendications 1 à **10**.

## Patentansprüche

1. Antriebseinheit für ein Luftfahrzeug, welche ein Turbinenstrahltriebwerk (3), eine Befestigungsstrebe (4) zum Befestigen des Turbinenstrahltriebwerks an einem Flügel des Luftfahrzeugs und einen Wärmetauscher (1), der ein an einer Oberseite (11) der Befestigungsstrebe befestigtes Wärmeaustauschgehäuse (4) aufweist, in welchem ein Heißluftstrom und ein Kühlluftstrom strömen, umfasst,
wobei der Wärmetauscher einen Heißluft-Zuströmkanal (18) zum Einführen des Heißluftstroms in das Gehäuse und einen Kühlluft-Auslasskanal (9) zum Ausstoßen des Kühlluftstroms aus dem Wärmeaustauschgehäuse aufweist,
**dadurch gekennzeichnet, dass** der Heißluft-Zuströmkanal und der Kühlluft-Auslasskanal konzentrisch sind und sich auf derselben Rückseite des Gehäuses befinden, und
dadurch, dass der Kühlluftstrom und der Heißluftstrom in dem Gehäuse horizontal und parallel zueinander strömen, wobei der Kühlluftstrom über eine Vorderseite (6) des Gehäuses in das Gehäuse eintritt, wobei der Heißluftstrom in dem Gehäuse von hinten nach vorn und anschließend von vorn nach hinten strömt, derart, dass der Heißluftstrom und der Kühlluftstrom in dem Gehäuse wenigstens teilweise in entgegengesetzter Richtung strömen.

2. Antriebseinheit nach Anspruch 1, **dadurch gekennzeichnet, dass** der Kühlluft-Auslasskanal den Heißluft-Zuströmkanal umgibt.

3. Antriebseinheit nach einem der Ansprüche 1 bis 2, **dadurch gekennzeichnet, dass** das Gehäuse Luftführungen (15) aufweist, in welchen der Heißluftstrom strömt, während der Kühlluftstrom um die Luftführungen herum strömt.

4. Antriebseinheit nach Anspruch 3, **dadurch gekennzeichnet, dass** die Luftführungen gebogen sind, wobei jede Luftführung das Wärmeaustauschgehäuse wenigstens zweimal durchquert.

5. Antriebseinheit nach einem der Ansprüche 3 bis 4, **dadurch gekennzeichnet, dass** die Luftführungen paarweise in dem Gehäuse angeordnet sind, wobei Paare von Luftführungen in dem Gehäuse übereinander angeordnet sind.

6. Antriebseinheit nach einem der Ansprüche 1 bis 5, **dadurch gekennzeichnet, dass** der Kühlluft-Auslasskanal (9) die Strebe durchquert, um den Kühlluftstrom auf der Rückseite des Turbinenstrahltriebwerks auszustoßen.

7. Antriebseinheit nach Anspruch 6, **dadurch gekennzeichnet, dass** der Kühlluft-Auslasskanal zwei Ausstoßdüsen aufweist, die unter der Strebe beiderseits des Turbinenstrahltriebwerks angeordnet sind.

8. Antriebseinheit nach einem der Ansprüche 1 bis 7, **dadurch gekennzeichnet, dass** der Heißluft-Zuströmkanal die Befestigungsstrebe durchquert, um den Heißluftstrom von dem Turbinenstrahltriebwerk zur Rückseite des Gehäuses des Wärmetauschers zu leiten, wobei der Heißluft-Zuströmkanal und der Kühlluft-Auslasskanal in der gesamten Durchquerung durch die Strebe konzentrisch sind.

9. Antriebseinheit nach einem der Ansprüche 1 bis 8, **dadurch gekennzeichnet, dass** ein Kühlluft-Zuströmkanal, der den Kühlluftstrom von dem Turbinenstrahltriebwerk zum Gehäuse des Wärmetauschers leitet, über der Befestigungsstrebe vorbeiführt.

10. Antriebseinheit nach Anspruch 9, **dadurch gekennzeichnet, dass** der Kühlluft-Zuströmkanal den Kühlluftstrom frontal in dem Turbinenstrahltriebwerk in einem Bereich der Gabelung der Luftströme aufnimmt, der sich unmittelbar nach dem Gebläse (8) des Turbinenstrahltriebwerks (3) befindet.

11. Luftfahrzeug, welches wenigstens eine Antriebseinheit nach einem der Ansprüche 1 bis 10 aufweist.

## Claims

1. Aircraft propulsion unit assembly comprising a turbojet engine (3), an attachment pylon (4) for attaching the turbojet engine to a wing structure of the aircraft, and a heat exchanger (1) comprising a heat exchange casing (4) attached to an upper face (11) of the attachment pylon, through which casing there circulate a stream of hot air and a stream of cooling air, the said heat exchanger comprising a hot air inlet duct (18) for conveying the stream of hot air into the casing and a cooling air discharge duct (9) for expelling the stream of cooling air from the heat exchange casing, **characterized in that** the said hot air inlet duct and the said cooling air discharge duct are concentric and situated on the same rear face of the casing, and **in that** the stream of cooling air and the stream of hot air circulate horizontally in the casing, parallel to one another, the stream of cooling air entering the casing via a front face (6) of the said casing, the stream of hot air circulating from back to front then from front to back in the casing so that the stream of hot air and the stream of cooling air at least partially circulate in opposite direction in the casing.

2. Propulsion unit assembly according to Claim 1, **characterized in that** the cooling air discharge duct surrounds the hot air inlet duct.

3. Propulsion unit assembly according to one of Claims 1 to 2, **characterized in that** the casing comprises air guides (15) in which the stream of hot air circulates, the stream of cooling air circulating around the said air guides.

4. Propulsion unit assembly according to Claim 3, **characterized in that** the air guides are bent, each air guide passing through the heat exchange casing at least twice.

5. Propulsion unit assembly according to one of Claims 3 and 4, **characterized in that** the air guides are arranged in pairs in the casing, pairs of air guides being superposed in the said casing.

6. Propulsion unit assembly according to one of Claims 1 to 5, **characterized in that** the cooling air discharge duct (9) passes through the pylon, so as to expel the stream of cooling air at the rear of the turbojet engine.

7. Propulsion unit assembly according to Claim 6, **characterized in that** the cooling air discharge duct comprises two expulsion nozzles arranged under the pylon, one on each side of the turbojet engine.

8. Propulsion unit assembly according to one of Claims 1 to 7, **characterized in that** the hot air inlet duct passes through the attachment pylon so as to convey the stream of hot air from the turbojet engine as far as the rear of the heat exchanger casing, the hot air inlet duct and the cold air discharge duct being concentric throughout the passage through the pylon.

9. Propulsion unit assembly according to one of Claims 1 to 8, **characterized in that** a cooling air inlet duct conveying the stream of cooling air from the turbojet engine as far as the heat exchanger casing passes above the attachment pylon.

10. Propulsion unit assembly according to Claim 9, **characterized in that** the cooling air inlet duct bleeds the stream of cooling air frontally from the turbojet engine in an airstream bifurcation zone situated immediately after the fan (8) of the turbojet engine (3).

11. Aircraft comprising at least one propulsion unit assembly according to one of Claims 1 to 10.
